# EUROPÄISCHE PATENTANMELDUNG

(11) **EP 4 621 256 A1**
(43) Veröffentlichungstag der Anmeldung: **24.09.2025**
(21) Anmeldenummer: 25160174.6
(22) Anmeldetag: 26.02.2025
(51) Int. Cl.: F16D 11/10, F16D 23/02, F16H 63/32, F16D 11/00, F16D 23/06

(54) **KOPPELVORRICHTUNG**

(30) Priorität: 18.03.2024 DE 102024202496
(71) Anmelder: Robert Bosch GmbH, 70442 Stuttgart (DE)
(72) Erfinder: Macsi, Balint, 1112 Budapest (HU); Spengler, Marton, 1103 Budapest (HU); Kajtar, Tamas, 1103 Budapest (HU)

(57) **Zusammenfassung**

Die Erfindung betrifft eine Koppelvorrichtung (1) zur An- und/oder Abkopplung eines Zahnrades (16) an eine bzw. von einer Welle (13), insbesondere in einem elektrischen Antriebsstrang eines Fahrzeugs, wobei die Koppelvorrichtung (1) eine Schaltmuffe (14) und eine Schaltgabel (7) aufweist, wobei die Schaltmuffe (14) einen Ringkörper (140) aufweist, der an seinem Außenumfang (142) mit umlaufenden Ringnut (144) versehen ist, wobei die Ringnut (144) einen Nutengrund (145) und Nutflanken (146,147) aufweist, wobei die Schaltgabel (7) einen Grundkörper (71) und zwei von dem Grundkörper (71) abstehende Schenkel (72, 73) aufweist, wobei die Schenkel (72,73) zumindest abschnittsweise in die Ringnut (144) derart eingreifen, dass die Schaltmuffe (14) relativ zu den Schenkeln (72,73) rotierbar ist und durch einen Antrieb der Schaltgabel (7) die Schaltmuffe (14) in einer axialen Richtung (100) verschiebbar ist, wobei die Schaltgabel (7) bei einem Antrieb in der axialen Richtung (100) mit wenigstens einer ersten Kontaktfläche (75a) an einer ersten Nutflanke (146) der Ringnut (144) und bei einem Antrieb in der entgegengesetzten axialen Richtung mit einer zweiten Kontaktfläche (75b) an einer gegenüberliegenden zweiten Nutflanke (147) der Ringnut (146) zur Anlage gelangt. Es wird vorgeschlagen, dass zumindest die erste Kontaktfläche (75a) und die zweite Kontaktfläche (75b) und/oder die erste Nutflanke (146) und die zweite Nutflanke (147) mit einer reibungsvermindernden Beschichtung (150) versehen sind.

## Beschreibung

### Stand der Technik

Im Stand der Technik sind Koppelvorrichtungen zur An- und/oder Abkopplung eines Zahnrades an eine beziehungsweise von einer Welle bekannt. Derartige Koppelvorrichtungen können beispielsweise in einem elektrischen Antriebsstrang dazu dienen, die elektrische Maschine mit der Abtriebsseite eines Getriebes zu koppeln oder davon abzukoppeln (sogenannte "Disconnect Unit"). Aus der DE 10 2021 208 600 A1 oder der DE 10 2020 216 152 A1 sind beispielsweise Koppelvorrichtungen für einem elektrischen Antriebsstrang eines Fahrzeugs bekannt, welche eine Schaltmuffe und eine Schaltgabel aufweisen, wobei die Schaltmuffe über einen Innenverzahnung drehfest, aber in einer axialen Richtung verschiebbar an einem Kupplungskörper einer Welle angeordnet ist und an ihrem Außenumfang mit einer umlaufenden Ringnut versehen ist. Die Schaltgabel weist einen Grundkörper auf, der beispielsweise mit einem Spindeltrieb oder einem elektromagnetischen Aktor in der axialen Richtung verstellbar ist. Die Schaltgabel greift mit zwei Schenkeln zumindest abschnittsweise in die Ringnut derart ein, dass die Schaltmuffe relativ zu den Schenkeln rotierbar ist. Durch einen Antrieb der Schaltgabel ist die Schaltmuffe in der axialen Richtung verschiebbar, wobei die Schaltgabel bei einem Antrieb in der axialen Richtung mit wenigstens einer ersten Kontaktfläche an einer ersten Nutflanke der Ringnut zur Anlage gelangen und bei einem Antrieb in der entgegengesetzten axialen Richtung mit einer zweiten Kontaktfläche an einer gegenüberliegenden zweiten Nutflanke der Ringnut zur Anlage gelangt. Durch die daraus resultierende Verschiebung der Schaltmuffe wird diese mit einem Koppelelement gekoppelt oder entkoppelt, wobei das Koppelelement beispielsweise mit einem als Losrad auf der Welle gelagerten Zahnrad fest verbunden ist.

Aufgrund der wirkenden Axialkraft beim Ein- und Auskuppel und der Rotation der Schaltmuffe relativ zu den Schenkeln der Schaltgabel reiben sich die Kontaktflächen der Schaltgabel an den Nutflanken der Ringnut. Diese Reibung führt zum Verschleiß an den Kontaktflächen, was aufgrund der hohen Anzahl von Betriebszyklen während der Lebensdauer der Koppelvorrichtung kritisch sein kann. Infolgedessen kann der Verschleiß zum Ausfall der Koppelvorrichtung und damit des elektrischen Antriebsstrangs führen.

Aus der DE 10 2011 075 491 A1 ist es bekannt, zur Reduzierung der Reibung zwischen der Schaltgabel und der Schaltmuffe ein Gleitelement aus Kunststoff an der Schaltgaben anzubringen, welches auf die Schaltgabel aufgeschnappt wird, wobei die Montage des Gleitelementes relativ aufwändig ist und diese mit hohem Aufwand an der Schaltgabel gegen ein versehentliches Ablösen gesichert werden muss.

### Offenbarung der Erfindung

Die Erfindung betrifft eine Koppelvorrichtung zur An- und/oder Abkopplung eines Zahnrades an eine bzw. von einer Welle, insbesondere in einem elektrischen Antriebsstrang eines Fahrzeugs, wobei die Koppelvorrichtung eine Schaltmuffe und eine Schaltgabel aufweist, wobei die Schaltmuffe einen Ringkörper mit einer Mittelachse aufweist, wobei der Ringkörper einen der Mittelachse zugewandten Innenumfang und einen von der Mittelachse abgewandten Außenumfang aufweist, wobei der Außenumfang mit einer die Mittelachse umlaufenden Ringnut versehen ist, wobei die Ringnut einen Nutengrund und zwei einander gegenüberliegende Nutflanken aufweist, wobei die Schaltgabel einen Grundkörper und zwei von dem Grundkörper abstehende Schenkel aufweist, wobei die Schenkel zumindest abschnittsweise in die Ringnut derart eingreifen, dass die Schaltmuffe relativ zu den Schenkeln rotierbar ist und durch einen Antrieb der Schaltgabel die Schaltmuffe parallel zu der Mittelachse in einer axialen Richtung verschiebbar ist, wobei die Schaltgabel bei einem Antrieb in der axialen Richtung mit wenigstens einer ersten Kontaktfläche an einer ersten Nutflanke der Ringnut zur Anlage gelangt und bei einem Antrieb in der entgegengesetzten axialen Richtung mit wenigstens einer zweiten Kontaktfläche an einer gegenüberliegenden zweiten Nutflanke der Ringnut zur Anlage gelangt. Erfindungsgemäß sind zumindest die erste Kontaktfläche und die zweite Kontaktfläche und/oder die erste Nutflanke und die zweite Nutflanke mit einer reibungsvermindernden Beschichtung versehen.

### Vorteile der Erfindung

Durch die reibungsvermindernde Beschichtung wird der Reibungskoeffizient im Kontaktbereich zwischen Schaltmuffe und Schaltgabel um Größenordnungen reduziert. Die Gleitbeschichtung kann in einfacher Weise auf die Nutflanken der Schaltmuffe und/oder zusätzlich auf die Kontaktflächen der Schaltgabel aufgebracht werden. Ohne die Beschichtung liegt der Haftreibungskoeffizient µ_{H} zwischen den beispielsweise aus Aluminium oder Stahl gefertigten Bauteilen in einer mit Öl geschmierten Koppelvorrichtung zwischen 0,2 und 0,3. Mit einer Beschichtung aus einem Material, welches beispielsweise Polytetrafluorethylen aufweist, beträgt der Haftreibungskoeffizient µ_{H} zwischen der Schaltmuffe und der Schaltgabel in einer mit Öl geschmierten Koppelvorrichtung beispielsweise nur noch 0,04. Der erheblich verringerte Reibungskoeffizient führt bei gleichen Betriebsbedingungen wie Drehzahl, Temperatur und Flächendruck vorteilhaft zu einer verminderten Reibung und damit zu einem reduzierten Verschleiß und einer erhöhten Lebensdauer der die Schaltgabel und die Schaltmuffe umfassenden Koppelvorrichtung. Weitere Vorteile bestehen darin, dass durch die Beschichtung der Haftgleiteffekt (sogenannter "Stick-Slip"-Effekt) bei niedrigen Geschwindigkeiten reduziert wird. Der Haftgleiteffekt ist bekannt als ein ruckhaftes Gleiten relativ zueinander bewegter Festkörper. Außerdem wird eine Tribokorrosion von Schaltgabel und Schaltmuffe vorteilhaft verzögert.

Vorteilhafte Ausgestaltungen und Weiterbildungen der Erfindung ermöglichen die in den abhängigen Ansprüchen enthaltenen Merkmale.

Die Beschichtung umfasst vorteilhaft ein Zweischichtensystem, mit einer auf die jeweilige Kontaktfläche oder Nutflanke aufgebrachten Grundschicht und einer auf die Grundschicht aufgebrachten Deckschicht. Die Grundschicht dient überwiegend als Haftschicht zum Anhaften an den jeweiligen Untergrund, bei dem es sich beispielsweise um Stahl oder Aluminium handeln kann. Bei der Grundschicht kann es sich beispielsweise um eine Phosphatschicht handeln.

Die Deckschicht besteht vorteilhaft aus einem Bindematerial, in das wenigstens ein Füllmaterial eingebracht ist, wobei das Füllmaterial in dem Bindematerial dispergierte Teilchen umfasst. Das Füllmaterial ist vorteilhaft ein Material, welches auch als Trockenschmierstoff verwendbar ist. So kann das Füllmaterial beispielsweise Polytetrafluorethylen (PTFE), Grafit oder Molybdändisulfid (MoS₂) umfassen, welches in Teilchenform in dem Bindematerial dispergiert ist. Als Bindematerial für die Deckschicht kann beispielsweise Acrylsäure, Polyurethan oder Epoxid verwandt werden.

Die Beschichtung kann eine Gesamtdicke zwischen 5 und 100 Mikrometern aufweisen. In einem bevorzugten Ausführungsbeispiel weist die Beschichtung eine Gesamtdicke zwischen 15 und 30 Mikrometern auf.

Die Beschichtung kann an der Schaltgabel auf die Kontaktflächen an den Schenkeln selektiv aufgebracht werden, wobei unterschiedliche Ausführungsformen in Betracht kommen. Beispielsweise können jeweils auf der Vorderseite und er Rückseite der Schenkel Kontaktflächen an den Schenkelenden und in der Mitte mit der Beschichtung versehen sein, insgesamt also sechs Kontaktflächen. Falls die Beschichtung alternativ oder zusätzlich in der Ringnut vorgesehen ist, so sind wenigstens die einander zugewandten Flanken der Ringnut zu beschichten. Zusätzlich kann aber auch der Nutengrund beschichtet sein, so dass die Beschichtung auf die gesamte Innenseite der Ringnut aufgebracht ist.

### Kurze Beschreibung der Zeichnungen

Nachfolgend werden mögliche Ausführungsformen der Erfindung unter Bezugnahme auf die beiliegenden Figuren erläutert. In der Zeichnung zeigen:
- Figur 1: einen Querschnitt durch ein Getriebe mit einer Koppelvorrichtung zur An- und/oder Abkopplung eines Zahnrades an eine Welle,
- Figur 2: eine vergrößerte Ansicht eines Querschnitts einer erfindungsgemäßen Koppelvorrichtung aus Schaltmuffe und Schaltgabel,
- Figur 3: eine Draufsicht auf die Koppelvorrichtung aus Figur 3,
- Figur 4: einen vergrößerten Detailausschnitt A aus Figur 2,
- Figur 5a: schematisch einen vergrößerten Detailausschnitt B aus Figur 4 in einem anfänglichen Zustand nach aufbringen der Beschichtung,
- Figur 5b: schematisch einen vergrößerten Detailausschnitt B aus Figur 4 in einem Zustand nach einer mehrfachen Benutzung der Koppelvorrichtung.

### Ausführungsformen der Erfindung

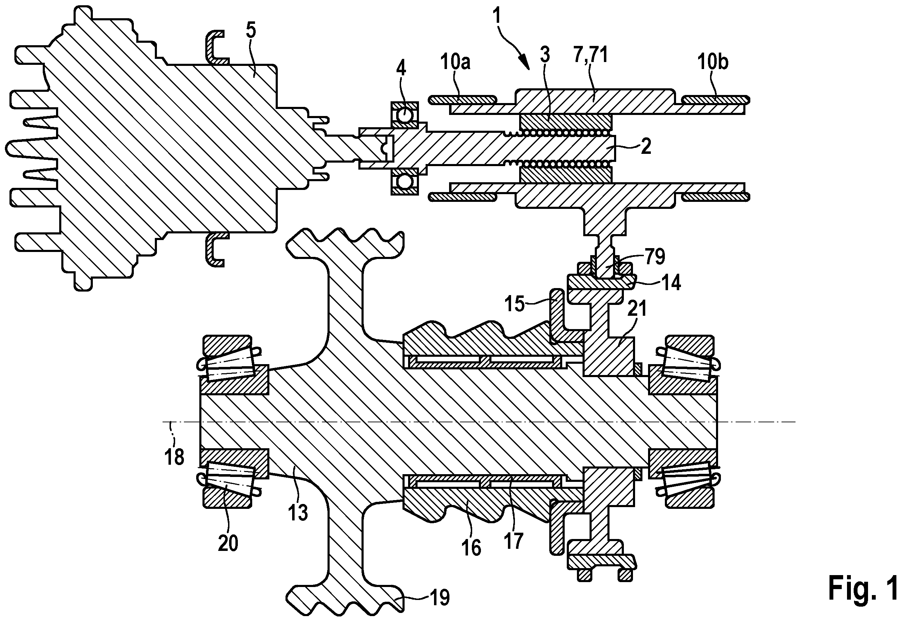

Figur 1 zeigt einen Querschnitt durch ein Ausführungsbeispiel eines Getriebes einer elektrischen Antriebseinrichtung mit einer Koppelvorrichtung 1 zur An- und/oder Abkopplung eines Zahnrades 16 an eine Welle 13. Die elektrische Antriebseinrichtung kann beispielsweise eine nicht dargestellte elektrische Maschine aufweisen, welche über das in Figur 1 dargestellte Getriebe eine Abtriebswelle antreibt, welche beispielsweise eine mit den Rädern eines Fahrzeuges gekoppelte Abtriebswelle sein kann. Die elektrische Maschine treibt beispielsweise auf der Antriebsseite des Getriebes das in Figur 1 dargestellte Zahnrad 16 an, welches über ein Nadellager 17 auf der Welle 13 rotierbar gelagert ist. Die Welle 13 kann über Wälzlager 20 in einem nicht dargestellten Getriebegehäuse um eine Drehachse 18 drehbar gelagert sein. In dem Getriebe kann eine Ölschmierung vorgesehen sein, wobei Öl aus einem Ölsumpf in dem Getriebegehäuse an die unterschiedlichen Lager transportiert wird. Ein mit der Welle 13 verbundenes Großzahnrad 19 überträgt das Moment auf der Abtriebsseite des Getriebes beispielweise auf ein nicht dargestelltes Differential, welches mit den Antriebsachsen eines Fahrzeuges gekoppelt ist. Um die Drehmomentübertragung der elektrischen Maschine auf die Abtriebsseite des Getriebes zu unterbrechen, ist eine Koppelvorrichtung 1 vorgesehen, welche dazu ausgestaltet ist, das Zahnrad 16 mit der Welle 13 zu koppeln oder das Zahnrad 16 von der Welle 13 zu entkoppeln.

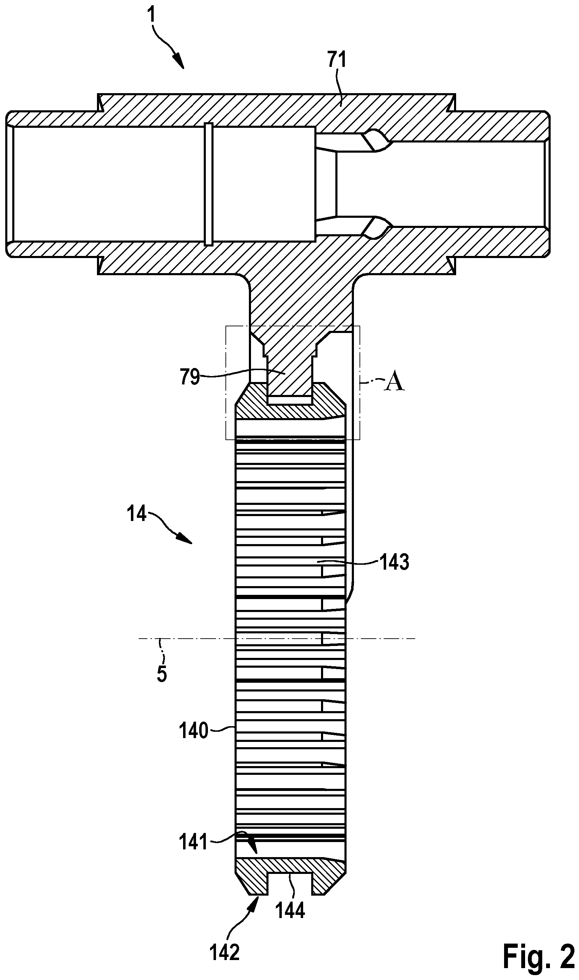

Die Koppelvorrichtung 1 umfasst eine Schaltgabel 7 und eine mit der Schaltgabel 7 zusammenwirkende Schaltmuffe 14, welche in Figur 2 vergrößert dargestellt sind. Die Schaltmuffe 14 ist vorzugsweise aus Metall gefertigt und weist einen Ringkörper 140 auf, der eine Mittelachse 5 umläuft. Der Ringkörper 140 weist einen der Mittelachse zugewandten Innenumfang 141 und einen von der Mittelachse abgewandten Außenumfang 142 auf. An dem Innenumfang 141 kann der Ringkörper 140 mit einer Innenverzahnung 143 versehen sein. Der Ringkörper 140 kann mit der Innenverzahnung 143 auf eine Außenverzahnung eines drehfest mit der Welle 13 verbundenen Kupplungskörpers 21 aufgeschoben werden, so dass die Schaltmuffe 14 drehfest und zugleich in einer axialen Richtung 100 verschiebbar an dem Kupplungskörper 21 gelagert ist. Die Mittelachse 5 des Ringkörpers fällt dabei mit der Drehachse 18 der Welle 13 zusammen. Die axiale Richtung 100, in welcher die Schaltmuffe verschiebbar an dem Kupplungskörper 21 gelagert ist, verläuft parallel zu der Mittelachse 5 und der Drehachse 18.

Wie weiterhin in Figur 1 zu erkennen ist, ist das Zahnrad 16 mit einem Koppelelement 15 drehfest verbunden, welches radial nach außen absteht und mit einer Außenverzahnung versehen ist. Durch eine Verschiebung der Schaltmuffe 14 in Figur 1 nach links greift der Ringkörper 140 der Schaltmuffe 14 aus Figur 2 mit der Innenverzahnung 143 in die Außenverzahnung des Koppelelementes 15 ein, wodurch das Zahnrad 16 mit der Welle 13 drehfest gekoppelt wird. Durch eine Verschiebung der Schaltmuffe 14 in Figur 1 nach rechts wird der Ringkörper 140 von dem Koppelelement 15 entfernt und das Zahnrad 16 kann relativ zu der Welle 13 rotieren.

Um die Schaltmuffe 14 in der axialen Richtung 100 zu verschieben, wird eine beispielsweise gleichfalls aus Metall gefertigte Schaltgabel 7 verwandt, die einen Grundkörper 71 aufweist. Der Grundkörper 71 kann zylindermantelförmig ausgebildet und an seinen Enden in Axiallagern 10a, 10b gleitverschiebbar aufgenommen sein. In einer zentralen Durchgangsöffnung des Grundkörpers 71 kann eine Spindelbuchse 3 befestigt sein, die mit einer in einem Wälzlager 4 drehbar gelagerten Spindel 2 zusammenwirkt. Die Spindel 2 wird beispielsweise durch einen elektrischen Aktuator 5 in eine Drehbewegung versetzt. Durch eine Linksdrehung oder Rechtsdrehung der Spindel 2 lässt sich der Grundkörper 71 in den Axiallagern 10a, 10b in der axialen Richtung 100 hin- und her verschieben.

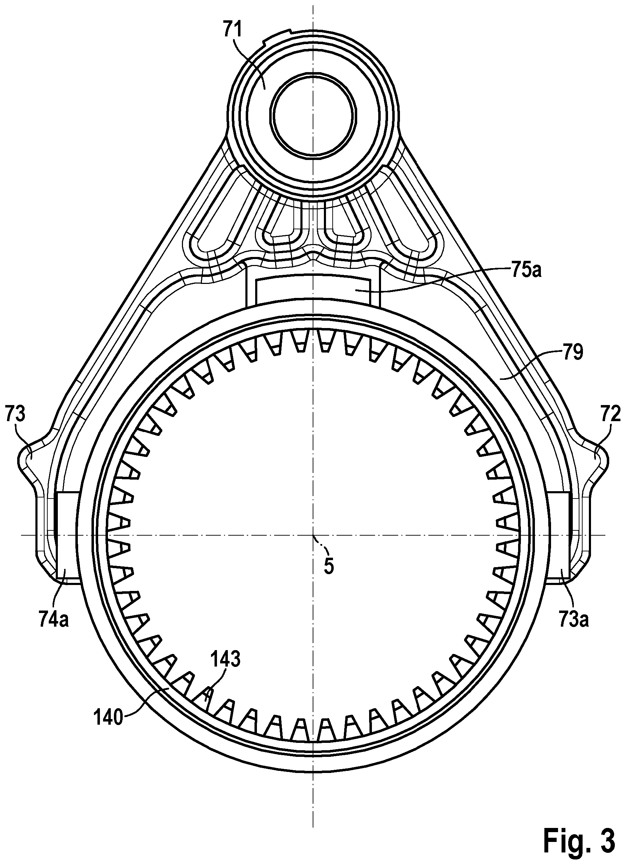

Wie am besten in Figur 3 zu erkennen ist, weist die Schaltgabel 7 zwei von dem Grundkörper 71 abstehende Schenkel 72 und 73 auf. Der zu der Schaltmuffe 14 hin abstehende Abschnitt der Schaltgabel 7 bildet zwischen den Schenkel 72 und 73 einen Steg 79 aus, dessen im Wesentlichen halbkreisförmige Innenkontur korrespondierend mit dem Außenumfang des Ringkörpers 140 der Schaltmuffe 14 ausgebildet ist.

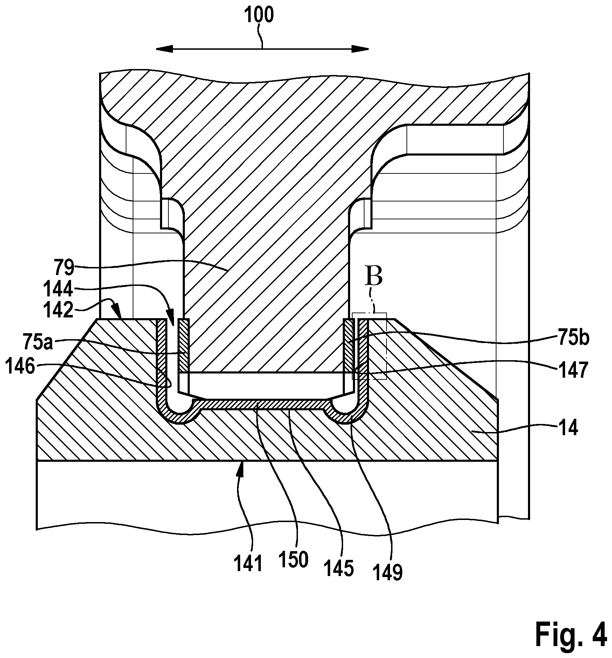

Wie in Figur 2 und Figur 4 dargestellt ist, ist die Schaltmuffe 14 an ihrem Außenumfang 142 mit einer die Mittelachse 5 umlaufenden Ringnut 144 versehen. In dem vergrößerten Ausschnitt A aus Figur 2 ist in Figur 4 zu erkennen, dass die Innenwandung der Ringnut 144 einen zylindrischen Nutengrund 145 und zwei einander gegenüberliegende Nutflanken 146, 147 mit jeweils kreisringförmigen Flächen aufweist. Zwischen den Nutenflanken 146, 147 und dem Nutengrund 145 kann jeweils eine umlaufende Absenkung 149 ausgebildet sein.

Wie weiterhin in Figur 2 und Figur 3 zu erkennen ist, greift die Schaltgabel 7 mit den Schenkeln 72, 73 in die Ringnut 144 ein, wobei die Schenkel 72, 73 mit dem zwischen den Schenkeln 72, 73 verlaufenden Steg 79 in die Ringnut eindringen. An den Schenkeln 72 und 73 beziehungsweise an dem Steg 79 sind auf jeder Seite der Schaltgabel 7 beispielsweise jeweils drei Kontaktflächen ausgebildet. Es kann sich aber auch um eine, zwei oder mehr als drei Kontaktflächen handeln. Auf der in Figur 3 dargestellten Vorderseite sind drei Kontaktflächen 73a, 74a und 75a erkennbar, wobei sich die beiden Kontaktflächen 73a und 74a an den jeweiligen Schenkelenden und die Kontaktfläche 75a in der Mitte der beiden Schenkel an dem Steg 79 befindet. Die zu der Vorderseite parallele Rückseite der Schaltgabel 7 ist entsprechend mit in Figur 3 nicht erkennbaren weiteren drei Kontaktflächen 73b, 74b und 75b versehen, von denen in der vergrößerten Detaildarstellung von Figur 4 nur die Kontaktfläche 75b erkennbar ist.

Die Schaltgabel 7 greift mit den Schenkeln 72,73 derart in die Ringnut 144 ein, dass die drei Kontaktflächen 73a, 74a und 75a einer ersten Nutflanke 146 zugewandt sind. Die rückseitigen drei Kontaktflächen 73b, 74b und 75b sind der zweiten Nutflanke 147 zugewandt.

Durch eine Betätigung des Spindelantriebs kann die Schaltgabel 7 in Figur 4 beispielsweise nach links in der axialen Richtung 100 verschoben werden, so dass die Kontaktflächen 73a, 74a und 75a an der ersten Nutflanke 146 zur Anlage gelangen. Durch die über die Schaltgabel 7 aufgebrachte Axialkraft wird die Schaltmuffe 14 in der axialen Richtung 100 nach links verschoben. Da die Schaltmuffe 14 über den in Figur 1 dargestellten Kupplungskörper 21, die Welle 13 und das Zahnrad 19 mit der Abtriebsseite des Getriebes drehfest verbunden ist, kann die Schaltmuffe 14 (beispielsweise bei einem rollenden Fahrzeug) relativ zu den Kontaktflächen 73a, 74a und 75a rotieren, wodurch im Kontaktbereich zwischen den Kontaktflächen 73a, 74a und 75a und der ersten Nutflanke 146 Reibung entsteht. Entsprechendes gilt für die drei Kontaktflächen 73b, 74b und 75b auf der Rückseite der Schaltgabel 7, wenn die Schaltgaben 7 in Figur 4 nach rechts in der entgegengesetzten axialen Richtung 100 verschoben wird, wobei dann die Kontaktflächen 73b, 74b und 75b an der zweiten Nutflanke 147 zur Anlage gelangen. Da sich die Schaltmuffe 14 und die Schaltgabel 7 im Ölraum des Getriebes befinden, bildet sich auf den Kontaktflächen und den Nutflanken ein Ölfilm, welcher die Reibung vermindert.

Erfindungsgemäß ist jedoch zur zusätzlichen Reduktion der Reibung zwischen den Kontaktflächen 73a, 74a, 75a, 73b, 74b und 75b und den Nutflanken 146, 147 vorgesehen, die Kontaktflächen und/oder die Nutflanken mit einer reibungsmindernden Beschichtung zu versehen, welche insbesondere zusätzlich zu dem Ölfilm die Reibung beeinflusst. Dabei können nur die Kontaktflächen 73a, 74a, 75a, 73b, 74b und 75b oder alternativ oder zusätzlich die Innenwandung der Ringnut 144 mit einer zumindest auf die Nutflanken 146 und 147 aufgebrachten Beschichtung 150 versehen sein. In dem hier dargestellten Ausführungsbeispiel der Figur 4 ist die Beschichtung 150 auf die gesamte Innenseite der Ringnut 144 aufgebracht. Die Beschichtung der Kontaktflächen und die Beschichtung 150 der Nutflanken kann das gleiche oder ein unterschiedliches Beschichtungsmaterial aufweisen.

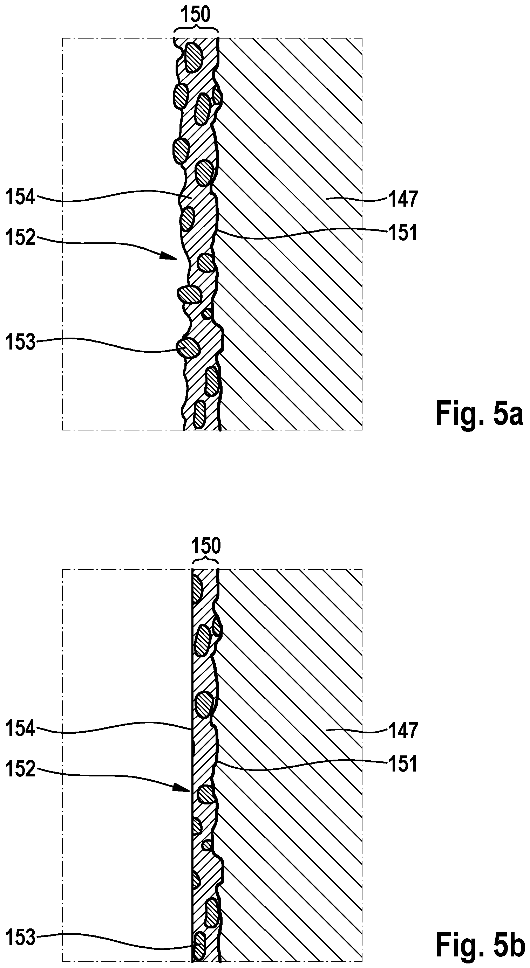

Ein vergrößerter Ausschnitt B aus Figur 4 ist in Figur 5a dargestellt, wobei Figur 5a die auf die zweite Nutflanke 147 aufgebrachte Beschichtung 150 in einem anfänglichen Zustand zeigt. Die Beschichtung 150 kann aus einem Zweischichtensystem bestehen, mit einer auf die Nutflanke 147 aufgebrachten Grundschicht 151 und einer auf die Grundschicht 151 aufgebrachten Deckschicht 152. Die Grundschicht 151 kann beispielsweise ein Phosphat umfassen, das auf die raue Oberfläche der metallischen Nutflanke 147 als Haftvermittlungsschicht aufgebracht ist. Die Deckschicht 152 wird direkt auf die Grundschicht 151 aufbracht und besteht aus einem Bindematerial 154, in das ein Füllmaterial 153 eingebracht ist, wobei das Füllmaterial 153 in dem Bindematerial 154 dispergierte Teilchen umfasst. Das Bindematerial 154 kann beispielsweise eines der folgenden Materialien umfassen: Acrylsäure, Polyurethan oder Epoxid. Das Füllmaterial 153 besteht aus einem Trockenschmierstoff, also einem Schmierstoff, der auch ohne Ölfilm einen geringen Reibungskoeffizienten aufweist. Das Füllmaterial 153 ist vorzugsweise ein Material aus der Gruppe: Polytetrafluorethylen, Grafit oder Molybdändisulfid. Das Füllmaterial wird in Form von dispergierten Teilchen in das Bindematerial 154 eingebracht.

Nach einigen wenigen Betriebszyklen schleift sich die Oberfläche der Beschichtung 150 etwas ab, so dass diese, wie in Figur 5b erkennbar ist, sehr glatt wird. Die an der Oberfläche freiliegenden Abschnitte des Füllmaterials verringern die Reibung zwischen den Kontaktflächen 73a, 74a, 75a, 73b, 74b und 75b und den Nutflanken 146, 147 weitaus mehr, als dies allein durch den Ölfilm möglich ist. Die Beschichtung 150 kann in dem in Figur 5b gezeigten Zustand eine Gesamtdicke zwischen 5 und 100 Mikrometern aufweisen. Besonders vorteilhaft ist ein Dicke zwischen 15 und 30 Mikrometern.

## Patentansprüche

1. Koppelvorrichtung (1) zur An- und/oder Abkopplung eines Zahnrades (16) an eine beziehungsweise von einer Welle (13), insbesondere in einem elektrischen Antriebsstrang eines Fahrzeugs, wobei die Koppelvorrichtung (1) eine Schaltmuffe (14) und eine Schaltgabel (7) aufweist, wobei die Schaltmuffe (14) einen Ringkörper (140) mit einer Mittelachse (5) aufweist, wobei der Ringkörper (140) einen der Mittelachse zugewandten Innenumfang (141) und einen von der Mittelachse abgewandten Außenumfang (142) aufweist, wobei der Außenumfang (142) mit einer die Mittelachse (5) umlaufenden Ringnut (144) versehen ist, wobei die Ringnut (144) einen Nutengrund (145) und zwei einander gegenüberliegende Nutflanken (146, 147) aufweist, wobei die Schaltgabel (7) einen Grundkörper (71) und zwei von dem Grundkörper (71) abstehende Schenkel (72, 73) aufweist, wobei die Schenkel (72, 73) zumindest abschnittsweise in die Ringnut (144) derart eingreifen, dass die Schaltmuffe (14) relativ zu den Schenkeln (72, 73) rotierbar ist und durch einen Antrieb der Schaltgabel (7) die Schaltmuffe (14) parallel zu der Mittelachse (5) in einer axialen Richtung (100) verschiebbar ist, wobei die Schaltgabel (7) bei einem Antrieb in der axialen Richtung (100) mit wenigstens einer ersten Kontaktfläche (75a) an einer ersten Nutflanke (146) der Ringnut (144) zur Anlage gelangt und bei einem Antrieb in der entgegengesetzten axialen Richtung mit wenigstens einer zweiten Kontaktfläche (75b) an einer gegenüberliegenden zweiten Nutflanke (147) der Ringnut (146) zur Anlage gelangt, **dadurch gekennzeichnet, dass** zumindest die erste Kontaktfläche (75a) und die zweite Kontaktfläche (75b) und/oder die erste Nutflanke (146) und die zweite Nutflanke (147) mit einer reibungsvermindernden Beschichtung (150) versehen sind.

2. Koppelvorrichtung (1) nach Anspruch 1, **dadurch gekennzeichnet, dass** die Beschichtung (150) ein Zweischichtensystem umfasst, mit einer auf die jeweilige Kontaktfläche (75a, 75b) oder Nutflanke (146, 147) aufgebrachten Grundschicht (151) und einer auf die Grundschicht (151) aufgebrachten Deckschicht (152).

3. Koppelvorrichtung (1) nach Anspruch 2, **dadurch gekennzeichnet, dass** die Deckschicht (152) ein Bindematerial (154) aufweist, in das wenigstens ein Füllmaterial (153) eingebracht ist, wobei das Füllmaterial (153) in dem Bindematerial (154) dispergierte Teilchen umfasst.

4. Koppelvorrichtung nach Anspruch 3, **dadurch gekennzeichnet, dass** das Füllmaterial (153) einen Trockenschmierstoff umfasst.

5. Koppelvorrichtung nach Anspruch 4, durch gekennzeichnet, dass das Füllmaterial (153) wenigstens ein Material aus der Gruppe:
Polytetrafluorethylen, Grafit oder Molybdändisulfid umfasst.

6. Koppelvorrichtung nach Anspruch 2, **dadurch gekennzeichnet, dass** die Grundschicht (151) ein Phosphat umfasst.

7. Koppelvorrichtung nach einem der Ansprüche 3 bis 6, **dadurch gekennzeichnet, dass** das Bindematerial (154) wenigstens eines der folgenden Materialien umfasst: Acrylsäure, Polyurethan oder Epoxid.

8. Koppelvorrichtung nach einem der vorstehenden Ansprüche, **dadurch gekennzeichnet, dass** die Beschichtung (150) eine Gesamtdicke zwischen 5 und 100 Mikrometern aufweist, insbesondere ein Dicke zwischen 15 und 30 Mikrometern aufweist.

9. Koppelvorrichtung nach einem der vorstehenden Ansprüche, **dadurch gekennzeichnet, dass** die Beschichtung (150) auf die gesamte Innenseite der Ringnut (144) aufgebracht ist.

10. Koppelvorrichtung nach einem der vorstehenden Ansprüche, **dadurch gekennzeichnet, dass** die Schaltgabel (7) bei einem Antrieb in der axialen Richtung (100) mit mehreren beschichteten Kontaktfläche (73a, 74a, 75a) an einer ersten Nutflanke (146) der Ringnut (144) zur Anlage gelangt und bei einem Antrieb in der entgegengesetzten axialen Richtung mit mehreren beschichteten Kontaktflächen (73b, 74b, 75b) an einer gegenüberliegenden zweiten Nutflanke (147) der Ringnut (146) zur Anlage gelangt.
